# EUROPEAN PATENT APPLICATION

(11) **EP 4 575 840 A1**
(43) Date of publication of application: **25.06.2025**
(21) Application number: 23854429.0
(22) Date of filing: 15.08.2023
(51) Int. Cl.: G06F 16/9535, G06F 9/451, G06Q 50/00

(54) **INFORMATION DISPLAY METHOD AND APPARATUS, DEVICE, AND MEDIUM**

(30) Priority: 15.08.2022 CN 202210977614
(71) Applicant: Beijing Zitiao Network Technology Co., Ltd., Beijing 100190 (CN)
(72) Inventor: FANG, Angxiang, Beijing 100028 (CN); LI, Yijie, Beijing 100028 (CN)
(74) Representative: Dentons UK and Middle East LLP
(86) International application number: PCT/CN2023/113065
(87) International publication number: WO 2024/037528

(57) **Abstract**

The present application discloses an information display method and apparatus, a device, and a medium. The method comprises: when a user inputs comment information to be published on a live stream interface, obtaining said comment information; and displaying at least one function label on the live stream interface on the basis of said comment information, wherein the function label is related to said comment information, and an entry for entering a function page corresponding to the function label can be provided for the user.

## Description

This application claims the priority and benefits of Chinese Patent Application No. 202210977614.X filed with the China National PATENT Administration on August 15, 2022 and entitled "METHOD AND APPARATUS FOR DISPLAYING INFORMATION, DEVICE, AND MEDIUM", the disclosure of which is incorporated by reference herein in its entirety as part of the present application.

### TECHNICAL FIELD

The present disclosure relates to the technical field of computers, and in particular, to a method and an apparatus for displaying information, a device, and a medium.

### BACKGROUND

With the continuous development of the live streaming technology, more and more users are participating in live streaming interaction. In a live streaming process, users can inquire about related contents of commodities by sending comments in a live-stream room. However, when there are many comments in the live-stream room, the streamer may be unable to reply in time, and the users cannot obtain interested information efficiently. The use experience of the users is affected.

### SUMMARY

In view of the above, embodiments of the present disclosure provide a method and an apparatus for displaying information, a device, and a medium.

In order to achieve the above objective, the present disclosure adopts the following technical solutions.

In a first aspect of the present disclosure, there is provided a method for displaying information, and the method includes:
receiving comment information to be posted input on a live-stream room interface; and
displaying at least one function label on the live-stream room interface based on the comment information to be posted, in which the function label is used for providing an entry to a function page corresponding to the function label.

In a second aspect of the present disclosure, there is provided an apparatus for displaying information, and the apparatus includes: a receiving unit and a display unit;
the receiving unit is configured to receive comment information to be posted input on a live-stream room interface; and
the display unit is configured to display at least one function label on the live-stream room interface based on the comment information to be posted, in which the function label is used for providing an entry to a function page corresponding to the function label.

In a third aspect of the present disclosure, there is provide an electronic device, and the electronic device includes a processor and a memory;
the memory is configured to store instructions or a computer program; and
the processor is configured to execute the instructions or the computer program in the memory to cause the electronic device to perform the method described in the first aspect.

In a fourth aspect of the present disclosure, there is provided a computer-readable storage medium, storing instructions which, when run on a device, cause the device to perform the method described in the first aspect.

In a fifth aspect of the present disclosure, there is provided a computer program product, the computer program product including computer programs/instructions which, when executed by a processor, implement the method described in the first aspect.

### BRIEF DESCRIPTION OF DRAWINGS

In order to describe the technical solutions in the examples of the present disclosure or in the prior art more clearly, the following briefly describes the accompanying drawings required for describing the examples or the prior art. Apparently, the accompanying drawings in the following description only show some examples of the present disclosure, and a person of ordinary skill in the art may still derive other drawings from these accompanying drawings without creative efforts.
Fig. 1 is a flowchart of a method for displaying information provided by an embodiment of the present disclosure;
Fig. 2a is a schematic diagram of a live-stream room interface provided by an embodiment of the present disclosure;
Fig. 2b is a schematic diagram of another live-stream room interface provided by an embodiment of the present disclosure;
Fig. 3a is a schematic diagram of displaying a function label provided by an embodiment of the present disclosure;
Fig. 3b is a schematic diagram of displaying another function label provided by an embodiment of the present disclosure;
Fig. 4a is a schematic diagram of a first selection page provided by an embodiment of the present disclosure;
Fig. 4b is a schematic diagram of a second selection page provided by an embodiment of the present disclosure;
Fig. 4c is a schematic diagram of another first selection page provided by an embodiment of the present disclosure;
Fig. 4d is a schematic diagram of inputting comment information in a live-stream room provided by an embodiment of the present disclosure;
Fig. 5 is a schematic diagram of an apparatus for displaying information provided by an embodiment of the present disclosure; and
Fig. 6 is a structural schematic diagram of an electronic device provided by an embodiment of the present disclosure.

### DETAILED DESCRIPTION

To enable a person skilled in the art to better understand the solutions of the present disclosure, the technical solutions in the embodiments of the present disclosure are described clearly and completely with reference to the accompany drawings in the embodiments of the present disclosure. Apparently, the described embodiments are some rather than all of the embodiments of the present disclosure. All other embodiments derived from the embodiments in the present disclosure by those of ordinary skill in the art without creative efforts should fall within the protection scope of the present disclosure.

At present, in a live streaming scenario, when a user interacts in a live-stream room, the user cannot acquire interested information rapidly, which affects the use experience of the user.

On this basis, the present disclosure provides a method for displaying information. When a user inputs comment information to be posted on a live-stream room interface, the comment information to be posted is obtained, and a related function label is determined according to the comment information to be posted and then displayed on the live-stream room interface to provide the user with an entry to a function page corresponding to the function label. A function label that the user is interested in can be located rapidly and accurately so that the user can obtain interested information rapidly via the function label, and improve the use experience.

It can be understood that before using the technical solutions of various embodiments of the present disclosure, a user should be notified of a type, a range of use, a usage scenario, etc. of personal information involved in an appropriate manner, and these should be authorized by the user.

For example, in response to receiving an active request from a user, a prompt message is sent to the user to explicitly prompt the user that the operation the user requests to perform will require to obtain and use the personal information of the user. Thus, the user can independently select, according to the prompt message, whether or not to provide the personal information to software or hardware such as an electronic device, an application, a server or a memory medium that performs the operations of the technical solutions of the present disclosure. As an alternative but non-limiting implementation, in response to receiving an active request from a user, a manner of sending a prompt message to the user may be, for example, using a pop-up window in which the prompt message may be presented in the form of text. Furthermore, the pop-up window may also carry option controls for a user to select to "agree" or "disagree" with providing personal information to an electronic device.

It can be understood that the processes of notifying of and authorizing by a user described above are merely exemplary and do not constitute a limitation on the implementations of the present disclosure, and other manners meeting relevant laws and regulations may also be applied to the implementations of the present disclosure.

For ease of understanding of the technical solutions provided by the embodiments of the present disclosure, the following description is made with reference to the accompanying drawings.

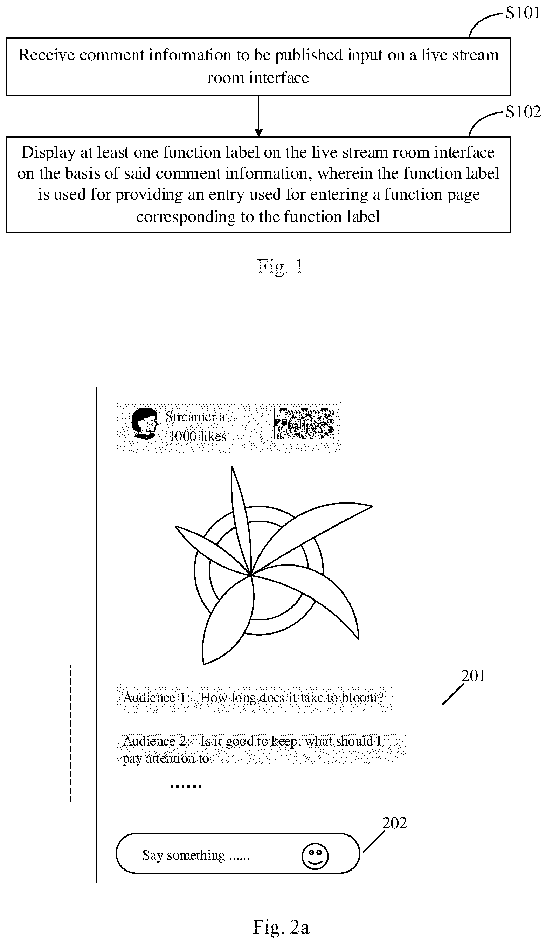

With reference to Fig. 1, there is shown a method for displaying information provided by an embodiment of the present disclosure. The method may be performed by a client for displaying information that may be installed on an electronic device. The electronic device may include devices with communication function, such as a mobile phone, a laptop computer, a desktop computer, a desktop computer, a vehicular terminal, a wearable electronic device, an all-in-one machine, and a smart home device, and may also be a virtual machine or a device simulated by a simulator. As shown in Fig. 1, the method may include the following steps.

S101, receive comment information to be posted input on a live-stream room interface.

In this embodiment, when a user enters a certain live-stream room via a live streaming client to watch live streaming, the user can post comments in the live-stream room. In some embodiments, the user may input comment information in an input box of the live-stream room interface. In response to the comment information to be posted input by the user in the input box of the live-stream room interface, the live streaming client obtains the comment information to be posted. The comment information to be posted refers to information that has not been displayed on the screen and is still in an input box of an input panel.

For example, Fig. 2a illustrates a schematic diagram of a live-stream room interface. The live-stream room interface 200 includes a live streaming video image in which a commodity that is being introduced may be displayed. Meanwhile, a comment display area 201 may be displayed on the live streaming video image in the form of a floating layer and an input area 202 may be displayed at the bottom of the live streaming video image. The user triggers the input area 202 to activate an input panel such that the comment information is input via the input panel. When the comment information input by the user has been displayed on the screen, comment information posted by audiences in the live-stream room may be displayed in the comment display area 201.

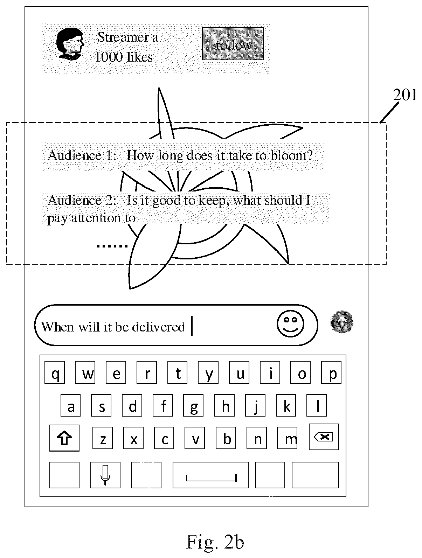

In this embodiment, when the user triggers the input area 202 to activate the input panel, the comment information to be posted is input in the input box of the input panel. For example, as shown in Fig. 2b, the comment information to be posted input by the user is "when will it be delivered".

S102, display at least one function label on the live-stream room interface based on the comment information to be posted.

In this embodiment, after obtaining the comment information to be posted input by the user in the input box, at least one function label related to the comment information may be determined based on the comment information to be posted, and then the at least one function label is displayed on the live-stream room interface. Specifically, the determined at least one function label may be displayed in the comment display area of the live-stream room interface. The function label may provide the user with an entry to a function page corresponding to the function label such that the user enters the corresponding function page by triggering the function label. This is convenient for the user to rapidly obtain an interested function label. Thus, the user can rapidly obtain interested information via the interested function label. The user experience is enhanced.

In some implementations, the function page corresponding to the function label is displayed in response to a triggering operation of the user on the function label. The client may display the function page in the form of a floating layer on the live-stream room interface or may jump from the live-stream room interface to the function page. When the function page is displayed, when the user goes back to the live-stream room interface, the comment information that has been input is still displayed in the input box. Thus, the comment information that has been input may be further edited or sent directly. Thus, the use experience of the user is enhanced.

As can be seen, when the user inputs the comment information to be posted in the input box of the live-stream room interface, the comment information is obtained, and at least one function label is displayed on the live-stream room interface based on the comment information to be posted. The function label is related to the comment information to be posted and can provide the user with the entry to the function page corresponding to the function label. That is, the present disclosure allows a function needed by the user to be located with the comment information to be posted input by the user and then displays the function label of the function on the live-stream room interface such that the user enters the corresponding function page via the function label. Thus, diversified demands of the user can be met. The user can rapidly obtain the interested information. The use experience of the user can be enhanced.

The function label displayed on the live-stream room interface may be an aggregate type label or may be an independent label. The aggregate type label refers to a label obtained by aggregating a plurality of function labels having a preset relationship. When the function label is an aggregate type label, a plurality of function labels corresponding to the aggregate type label are shown on the live-stream room interface in response to a triggering operation of the user for the aggregate type label so that the user can rapidly obtain a plurality of interested function labels. The information obtaining efficiency is improved.

When the at least one function label includes a first function label and a second function label, the first function label and the second function label may be lateral labels, and the user can select to trigger one of the first function label and the second function label. Alternatively, the first function label and the second function label may be parent and child labels. For example, the first function label is a parent label and the second function label is a child label. When the second function label is displayed, the first function label is displayed simultaneously.

In some implementations, a target demand corresponding to the user may be determined based on the comment information to be posted; and at least one function label matching the target demand may be obtained. That is to say, a demand of the user is first determined based on the comment information to be posted, and then a function label corresponding to the demand is determined as the matched function label.

A user demand of the user may be determined based on the comment information to be posted specifically in the following manners.

In one manner, a user demand is predicted with a keyword. Specifically, matching is performed between words in the comment information and a preset keyword to obtain a target keyword, and a user demand corresponding to the target keyword is determined as the target demand of the user. The target keyword is used for reflecting the user demand. That is, keywords representing different demands of the user may be preset. After the comment information to be posted input by the user is obtained, the comment information is divided into words to obtain a word included in the comment information, and matching is performed between the word and the keywords. When a word matches a certain keyword, the user demand corresponding to the keyword is determined as the target demand of the user corresponding to the comment information. The word matching the keyword may refer to the word being completely consistent with the keyword, or a similarity of the word with the keyword being greater than a preset similarity threshold. For example, it is preset that keyword a corresponds to user demand a, keyword b corresponds to user demand b, and keyword c corresponds to user demand c. The comment information is divided into words to obtain word k, and the word k is matched with the keyword a, the keyword b, and the keyword c, respectively. When the word k matches and is consistent with the keyword b, the target demand corresponding to the comment information is the user demand b.

In another manner, a demand of the user is obtained by means of a demand prediction model. Specifically, the comment information to be posted is input to the demand prediction model to obtain the target demand corresponding to the user. Specifically, the comment information to be posted is input to the demand prediction model to obtain a prediction result output by the demand prediction model. When the prediction result meets a preset condition, a user demand corresponding to the demand prediction model is determined as the target demand. The prediction result may represent a probability that the user demand corresponding to the input comment information to be posted is the user demand corresponding to the demand prediction model. The greater the probability, the greater the possibility that the user demand corresponding to the comment information to be posted is the user demand corresponding to the demand prediction model. The preset condition may be a preset probability threshold, and a specific value may be determined according to a practical application situation.

It needs to be noted that a user demand may be predicted according to the comment information to be posted in one of the above manners, and the user demand may be predicted in one of the above manners selected according to the practical application situation or determined according to a preset priority. For example, the priority of prediction based on the preset keyword is higher than that based on the demand prediction model. Alternatively, both of the above manners may be utilized for prediction. When different user demands are predicted in two manners, the predicted different user demands may be determined as the user demands corresponding to the comment information. Alternatively, a use priority may also be preset, and a user demand having a high priority may be determined as the target demand reflected by the comment information. For example, the priority of a user demand predicted based on a keyword is higher than that of a user demand predicted based on the demand prediction model.

In some implementations, determining at least one function label displayed on the live-stream room interface based on the comment information to be posted may also be implemented in the following manner: when the comment information to be posted includes a text corresponding to a preset keyword, at least one function label corresponding to the preset keyword is displayed on the live-stream room interface according to the preset keyword. That is to say, a correspondence between different keywords and function labels may be configured in advance. When the text included in the comment information to be posted matches a certain preset keyword, at least one function label corresponding to the keyword is displayed on the live-stream room interface.

In some implementations, displaying at least one function label on the live-stream room interface based on the comment information to be posted includes: when the comment information to be posted includes a sentence corresponding to a preset resource type keyword or the comment information to be posted indicates that a user demand is resource type information, displaying at least one resource type function label on the live-stream room interface. For example, when a content displayed on the live-stream room interface is a live commerce content, viewers may get to know related information of sold commodities by posting comments.

The resource type keyword may be a keyword related to a customer servicer corresponding to a resource; the resource type information may be information related to a customer servicer corresponding to a resource; and the resource type function label may be a function label related to a customer servicer corresponding to a resource. The resource may be a commodity sold in the live-stream room. In this case, the method further includes: displaying a session interface in response to a triggering operation of the user on the function label related to the customer servicer; and sending an inquiry message to the customer servicer in response to a triggering operation of the user on the session interface. That is, when the comment information to be posted includes a text corresponding to a keyword related to a customer servicer corresponding to a resource, it indicates that the user demand of the user is to obtain information corresponding to the customer servicer corresponding to the resource, and the function label related to the customer servicer corresponding to the resource is displayed on the live-stream room interface. When the user triggers an operation for the displayed function label related to the customer servicer, a session interface with the customer servicer is displayed such that the user communicates with the customer servicer via the session interface.

When the resource type keyword is a resource transfer type keyword, the resource type information is resource transfer type information; and the resource type function label includes a resource transfer type label. Resource transfer may refer to resource transfer from a resource delivery terminal to a resource receiving end. For example, in a live commerce scenario, resource transfer refers to a merchant delivering the commodity to a buyer. In this case, the method further includes: displaying a resource transfer page in response to a triggering operation of the user for the resource transfer type label. The user may view resource transfer related information or trigger a corresponding operation through the resource transfer page. That is, when the comment information to be posted includes a text corresponding to a resource transfer type keyword, it indicates that the user demand of the user is to obtain resource transfer type information, and the resource transfer type label is displayed on the live-stream room interface.

Specifically, when the resource transfer type keyword is a keyword related to a resource delivery prompt, the resource transfer type information is resource delivery prompt information, and the resource transfer type label includes a resource delivery prompt label. In this application scenario, the method further includes: displaying a resource delivery prompt page in response to a triggering operation of the user for the resource delivery prompt label; and sending an alerting reminder message to a resource delivery terminal in response to a triggering operation of the user on the resource delivery prompt page.

In response to a triggering operation of the user for the resource delivery prompt label, at least one first resource label associated with the resource delivery prompt label may also be displayed; and in response to a triggering operation of the user for one of the at least one first resource label, an alerting reminder message is sent to a resource delivery terminal corresponding to the first resource label. That is to say, when there are a plurality of resources in a non-delivered state, in response to a triggering operation of the user for the resource delivery prompt label, respective first resource labels corresponding to the plurality of resources are displayed; and when the user triggers an operation for one of the first resource labels, an alerting reminder message is sent to the resource delivery terminal corresponding to the first resource label. By displaying a plurality of first resource labels, the user can rapidly obtain a resource to which an alerting reminder message needs to be sent. The processing efficiency of the user is improved.

When the resource transfer type keyword is a keyword related to logistics corresponding to a resource, the resource transfer type information is logistics information corresponding to a resource, and the resource transfer type label includes a logistics label corresponding to a resource. In this case, the method further includes: displaying a logistics page in response to a triggering operation of the user on the logistics label, in which the logistics page displays logistics information corresponding to a resource.

In response to a triggering operation of the user on the logistics label, at least one second resource label associated with the logistics label may also be displayed; and in response to a triggering operation of the user for one of the at least one second resource label, logistics information corresponding to the second resource label is displayed. That is to say, when there are a plurality of resources in a delivered state, in response to a triggering operation of the user for the resource delivery prompt label, respective second resource labels corresponding to the plurality of resources are displayed; and when the user triggers an operation for one of the second resource labels, logistics information of a second resource corresponding to the second resource label is displayed. By displaying a plurality of second resource labels, the user can rapidly know the resource in the delivered state. The viewing efficiency of the user is improved.

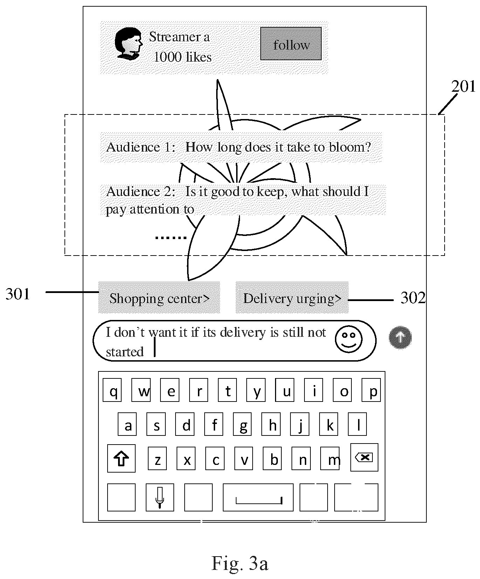

When the resource delivery prompt label or the logistics label is displayed on the live-stream room interface, it may be displayed in the form of parent and child labels. That is, a parent label corresponding to the resource delivery prompt label and the resource delivery prompt label are displayed on the live-stream room interface, or a parent label corresponding to the logistics label and the logistics label are displayed on the live-stream room interface. The parent label corresponding to the resource delivery prompt label and the parent label corresponding to the logistics label may be the same parent label. For example, the corresponding parent labels are all resource centers. For example, as shown in Fig. 3a, when the user inputs "I don't want it if its delivery is still not started" in the input box, which includes the text corresponding to the keyword related to the resource delivery prompt, it indicates that the user wants to send the resource delivery prompt information to the resource delivery terminal. Accordingly, a delivery urging (resource delivery prompt label) label 302 and its corresponding parent label, i.e., "shopping center" label 301, are displayed on the live-stream room interface. The user may directly tap on the "shopping center" label to directly enter a shopping center page, or may directly tap on "delivery urging" label 302 to directly enter the resource delivery prompt page.

In some implementations, when the displayed at least one function label is determined based on the comment information to be posted, at least one directed object function label is displayed on the live-stream room interface when the comment information to be posted includes a directed character type text. Directing refers to sending a message to a specific target object. A specific representation form of the directed character type text may be set according to a practical application situation. For example, the directed character type text is character @. When the user sends comment information including a directing character and a directed object to a comment area of the live-stream room interface, other objects in the live-stream room can view the comment information, and meanwhile, the comment information may be associated with the directed object to remind the directed object of viewing the comment information in time or remind the directed object of entering the live-stream room.

The directed object function label may include a first directed object function label and/or a second directed object function label. A first directed object indicated by the first directed object function label refers to an object in the same live-stream room as the user, and a second directed object indicated by the second directed object label refers to an object having a preset association relationship with the user. For example, the second object is other user in the same live-stream room as the user.

In some implementations, a first selection page is displayed in response to a triggering operation of the user on the first directed object label, in which the first selection page displays a plurality of first candidate objects, and the first candidate objects are objects in the same live-stream room as the user. Specifically, the first candidate objects refer to user identifiers corresponding to other users in the same live-stream room as the user. Further, the first selection page may further display a first directed control which is configured to add the user identifier of the first candidate object corresponding to the first directed control to the comment information to be posted in response to a triggering operation of the user. Specifically, the first directed control is in one-to-one correspondence with the first candidate object.

In some implementations, a second selection page is displayed in response to a triggering operation of the user on the second directed object label, in which the second selection page displays a plurality of second candidate objects, and the second candidate objects are objects which are objects having a preset association relationship with the user. Specifically, the second candidate objects refer to user identifiers corresponding to other users having the preset association relationship with the user. Further, the second selection page further displays a second directed control which is configured to add the user identifier of the second candidate object corresponding to the second directed control to the comment information to be posted in response to a triggering operation of the user. Specifically, the second directed control is in one-to-one correspondence with the second candidate object. The second candidate object may be an object followed by the user via the live streaming client, or the second object is a friend of the user.

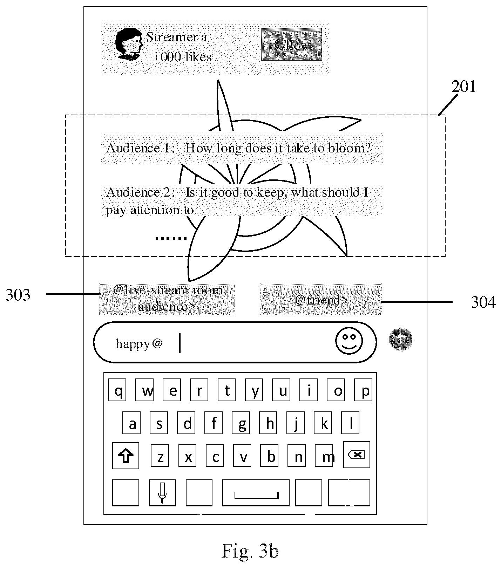

For example, as shown in Fig. 3b, when the user inputs "happy@" in the input box, the client obtains that the user inputs the directing character @, and a "@live-stream room audience" label 303 and a "@friend" label 304 are displayed on the live-stream room interface. The "@live-stream room audience" label 301 is a first directed object label, and the "@friend" label 302 is a second directed object label.

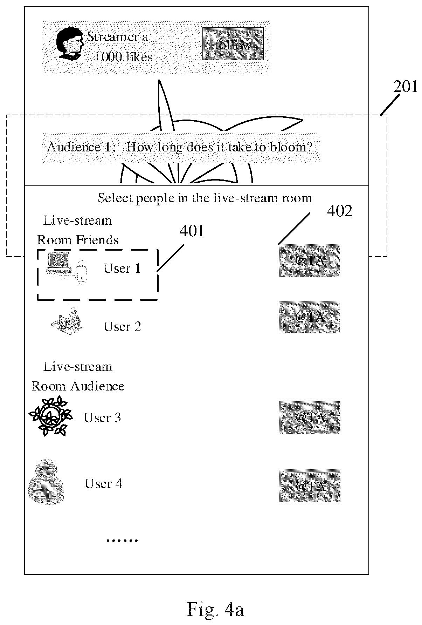

When the user triggers the label 301, the first selection page is displayed. For example, Fig. 4a illustrates a schematic diagram of a first selection page. The user identifiers 401 (user avatars and user nicknames) of all audiences in the live-stream room and the first directed controls 402 are displayed in the first selection page. When there are many audiences in the live-stream room, a sliding control may be displayed at a side edge of the first selection page so that the user identifiers of more first candidate objects can be browsed by means of the sliding control. When the audiences of the live-stream room include friends of the user, the first selection page may be divided into different display areas. For example, the user identifiers of the friends are displayed in a first area, and the user identifiers of other audiences are displayed in a second area, as shown in Fig. 4a.

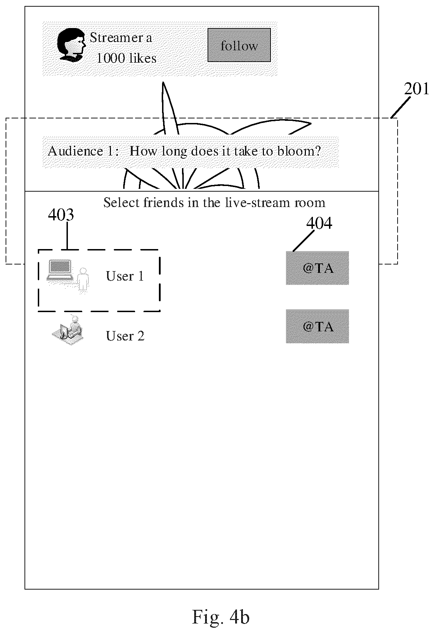

When the user triggers the label 302, the second selection page is displayed. For example, Fig. 4b illustrates a schematic diagram of a second selection page. User identifiers 403 (user avatars and user nicknames) of the corresponding friends of the user: user 1 and user 2, and respective second directed controls 404 are displayed in the second selection page. When there are many friends, a sliding control may be displayed at a side edge of the second selection page so that the user identifiers of more second candidate objects can be browsed by means of the sliding control.

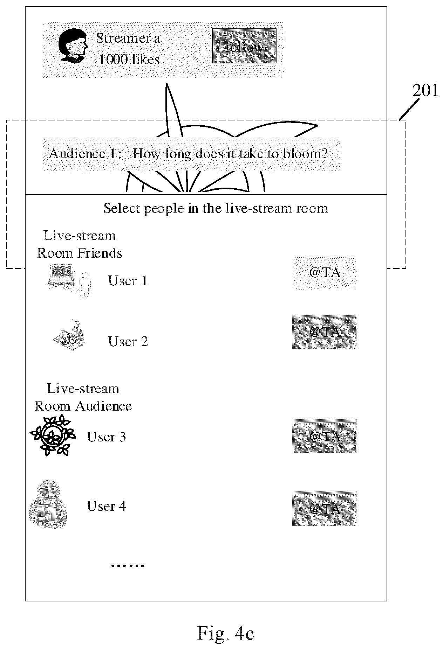

When a plurality of users are directed in one input operation, when the first selection page or the second selection page is activated at a first time, all users displayed in the first selection page or the second selection page may be selected. When the first selection page or the second selection page is activated at a second time, the user identifiers of all the users may also be displayed in the first selection page or the second selection page. However, the user identifiers selected at the first time are in a non-selectable state (i.e., they cannot be selected), and the user identifiers not selected at the first time are in a selectable state when displayed at the second time. For example, Fig. 4c illustrates a schematic diagram of a first selection page. For example, when the user wants to @user 1 and @user 4 in a current comment, when the first selection page is activated at the first time, the first page includes user 1, user 2, user 3, and user 4, and the user 1 is selected. When the first selection page is activated again, the first selection page still includes the user 1, the user 2, the user 3, and the user 4, but the user 1 is displayed in gray and cannot be selected, and the user can only select from the user 2, the user 3, and the user 4.

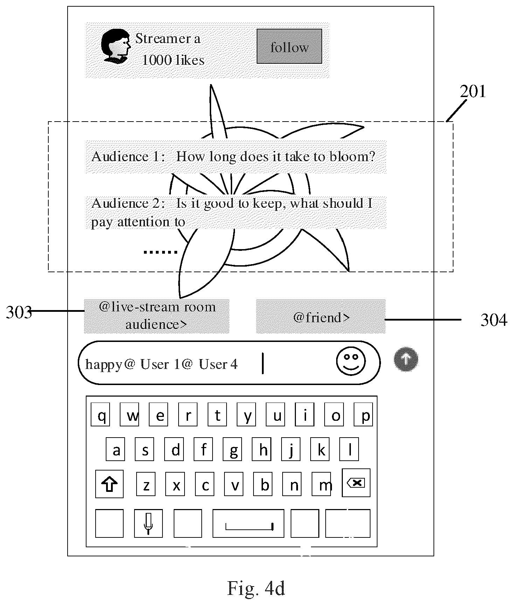

An identifier of a candidate object selected by the user is displayed in the input box in response to a triggering operation of the user on the first directed control and/or the second directed control. For example, as shown in Fig. 4d, the user 1 and the user 4 selected by the user through the first selection page are displayed in the input box.

In some implementations, the comment information in the input box is displayed in the comment display area of the live-stream room interface in response to a sending operation triggered by the user for the input box. The comment information includes the identifier of the candidate object selected by the user to prompt the candidate object corresponding to the identifier to view the comment information.

In some implementations, displaying the function label is canceled on the live-stream room interface in response to a closing operation triggered by user for input box. That is, when the user closes the input box, it indicates that the user has no input temporarily and the determined user demand has been achieved, and displaying the function label is canceled. Thus, when the user triggers an input operation again, a new user demand is continuously obtained, and a function label is matched based on the new user demand and shown. Accordingly, different demands of the user can be met, and the use experience of the user can be enhanced.

In some implementations, one or more resident function labels may also be displayed on the live-stream room interface. The one or more resident function labels may be preset function labels for the live streaming client, or the user may set one or more function labels shown as resident function labels so that the user can rapidly obtain interested information through the resident function labels without inputting the comment information to be posted in the input box. The use experience of the user is enhanced. Function labels having a preset relationship among a plurality of resident function labels may be aggregated and displayed.

When the user sets any function label of the at least one function label as the resident function label, the any function label is fixedly shown on the live-stream room interface. When the user cancels any function label of the at least one function label from the resident one, displaying the any function label is canceled on the live-stream room interface.

In some implementations, the live streaming client may also display one or more recommendation function labels on the live-stream room interface. Thus, the efficiency of the user obtaining the interested function label is improved.

Based on the above method examples, an embodiment of the present disclosure provides a structural diagram of an apparatus for displaying information, which is described below with reference to the accompanying drawings.

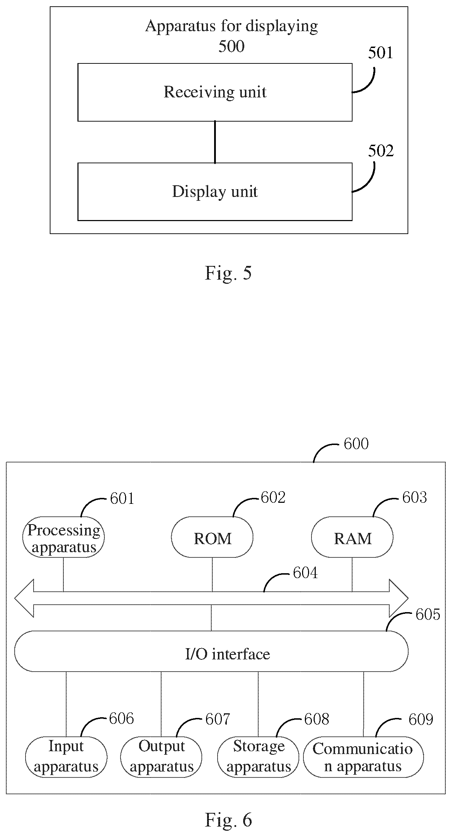

With reference to Fig. 5, there is shown a structural diagram of an apparatus for displaying information provided by an embodiment of the present disclosure. The apparatus 500 may include a receiving unit 501 and a display unit 502.

The receiving unit 501 is configured to receive comment information to be posted input on a live-stream room interface.

The display unit 502 is configured to display at least one function label on the live-stream room interface based on the comment information to be posted, in which the function label is used for providing an entry to a function page corresponding to the function label.

In one embodiment of the present disclosure, the receiving unit 501 is specifically configured to receive the comment information to be posted input by a user in an input box of the live stream interface.

The display unit 502 is specifically configured to display at least one function label on the live-stream room interface based on the comment information to be posted, in which the function label is used for providing the user with the entry to the function page corresponding to the function label.

In one embodiment of the present disclosure, the display unit 502 includes a determination sub-unit and a display sub-unit.

The determination sub-unit is configured to determine a target demand corresponding to the user based on the comment information to be posted.

The display sub-unit is configured to obtain at least one function label matching the target demand and display the at least one function label on the live-stream room interface.

In one embodiment of the present disclosure, the determination sub-unit is specifically configured to perform matching between words in the comment information and a preset keyword to obtain a target keyword, and determine a user demand corresponding to the target keyword as the target demand of the user.

In one embodiment of the present disclosure, the determination sub-unit is specifically configured to input the comment information to be posted to a demand prediction model to obtain the target demand corresponding to the user.

In one embodiment of the present disclosure, the display unit 502 is specifically configured to, when the comment information to be posted includes a text corresponding to a preset keyword, display at least one function label corresponding to the preset keyword on the live-stream room interface according to the preset keyword.

In one embodiment of the present disclosure, the display unit 502 is specifically configured to, when the comment information to be posted includes a sentence corresponding to a preset resource type keyword or the comment information to be posted indicates that a user demand is resource type information, display at least one resource type function label on the live-stream room interface.

In one embodiment of the present disclosure, the resource type keyword is a keyword related to a customer servicer corresponding to a resource; the resource type information is information related to a customer servicer corresponding to a resource; and the resource type function label is a function label related to a customer servicer corresponding to a resource. The apparatus further includes a sending unit.

The display unit 502 is further configured to display a session interface in response to a triggering operation of the user on the function label related to the customer servicer.

The sending unit is configured to send an inquiry message to the customer servicer in response to a triggering operation of the user on the session interface.

In one embodiment of the present disclosure, the resource type keyword is a resource transfer type keyword; the resource type information is resource transfer type information; and the resource type function label includes a resource transfer type label.

In one embodiment of the present disclosure, the resource transfer type keyword is a keyword related to a resource delivery prompt; the resource transfer type information is resource delivery prompt information; and the resource transfer type label includes a resource delivery prompt label. The apparatus further includes a sending unit.

The display unit 502 is further configured to display a resource delivery prompt page in response to a triggering operation of the user for the resource delivery prompt label.

The sending unit is configured to send an alerting reminder message to a resource delivery terminal in response to a triggering operation of the user on the resource delivery prompt page.

In one embodiment of the present disclosure, the resource transfer type keyword is a keyword related to logistics corresponding to a resource; the resource transfer type information is logistics information corresponding to a resource; and the resource transfer type label includes a logistics label corresponding to a resource.

The display unit 502 is further configured to display a logistics page in response to a triggering operation of the user on the logistics label, in which the logistics page displays logistics information corresponding to a resource.

In one embodiment of the present disclosure, the display unit 502 is specifically configured to display at least one directed object function label on the live-stream room interface when the comment information to be posted includes a directed character type text.

In one embodiment of the present disclosure, the display unit 502 is specifically configured to, when the comment information to be posted includes the directed character type text, display a first directed object function label on the live-stream room interface.

The display unit 502 is further configured to display a first selection page in response to a triggering operation of the user on the first directed object label, in which the first selection page displays a plurality of first candidate objects, and the first candidate objects are objects in a same live-stream room as the user.

In one embodiment of the present disclosure, the display unit 502 is further configured to, when the comment information to be posted includes the directed character type text, display a second directed object function label on the live-stream room interface.

The display unit 502 is further configured to display a second selection page in response to a triggering operation of the user on the second directed object label, in which the second selection page displays a plurality of second candidate objects, and the second candidate objects are objects having a preset association relationship with the user.

In one embodiment of the present disclosure, the first selection page further displays a first directed control, and/or the second selection page further displays a second directed control; and the display unit 502 is specifically configured to display an identifier of a candidate object selected by the user in the input box in response to a triggering operation of the user on the first directed control and/or the second directed control.

In one embodiment of the present disclosure, the display unit 502 is further configured to display comment information in the input box in a comment display area of the live-stream room interface in response to a sending operation triggered by the user for the input box, in which the comment information includes the identifier of the candidate object selected by the user to prompt the candidate object corresponding to the identifier to view the comment information.

In one embodiment of the present disclosure, the display unit 502 is further configured to display the function page corresponding to the function label in response to a triggering operation of the user on the function label.

In one embodiment of the present disclosure, the apparatus further includes a canceling unit.

The canceling unit is further configured to cancel displaying the function label on the live-stream room interface in response to a closing operation triggered by user for the input box.

It needs to be noted that for specific implementations of the units in this embodiment, a reference may be made to the related descriptions in the above method embodiments. The division of units in this embodiment of the present disclosure is schematic, which is merely logical function division, and there may be another division method in actual implementation. Functional units in the embodiment of the present disclosure may be integrated into one processing unit, or each of the units may exist alone physically, or two or more units are integrated into one unit. For example, in the above embodiment, the processing unit and the sending unit may be a same unit or may be different units. The above integrated unit may be implemented either in a form of hardware or in a form of a software functional unit.

Referring to Fig. 6, and it shows the structure schematic diagram suitable for achieving the electronic device 600 in the embodiment of the present disclosure. The terminal device in the embodiment of the present disclosure may include but not be limited to a mobile terminal such as a mobile phone, a notebook computer, a digital broadcasting receiver, a personal digital assistant (PDA), a PAD (tablet computer), a portable multimedia player (PMP), a vehicle terminal (such as a vehicle navigation terminal), and a fixed terminal such as a digital television (TV) and a desktop computer. The electronic device shown in Fig. 6 is only an example and should not impose any limitations on the functions and use scopes of the embodiments of the present disclosure.

As shown in Fig. 6, the electronic device 600 may include a processing apparatus (such as a central processing unit, and a graphics processor) 601, it may execute various appropriate actions and processes according to a program stored in a read-only memory (ROM) 602 or a program loaded from a storage apparatus 608 to a random access memory (RAM) 603. In RAM 603, various programs and data required for operations of the electronic device 600 are also stored. The processing apparatus 601, ROM 602, and RAM 603 are connected to each other by a bus 604. An input/output (I/O) interface 605 is also connected to the bus 604.

Typically, the following apparatuses may be connected to the I/O interface 605: an input apparatus 606 such as a touch screen, a touchpad, a keyboard, a mouse, a camera, a microphone, an accelerometer, and a gyroscope; an output apparatus 607 such as a liquid crystal display (LCD), a loudspeaker, and a vibrator; a storage apparatus 608 such as a magnetic tape, and a hard disk drive; and a communication apparatus 609. The communication apparatus 609 may allow the electronic device 600 to wireless-communicate or wire-communicate with other devices so as to exchange data. Although Fig. 6 shows the electronic device 600 with various apparatuses, it should be understood that it is not required to implement or possess all the apparatuses shown. Alternatively, it may implement or possess the more or less apparatuses.

Specifically, according to the embodiment of the present disclosure, the process described above with reference to the flow diagram may be achieved as a computer software program. For example, an embodiment of the present disclosure includes a computer program product, it includes a computer program loaded on a non-transient computer-readable medium, and the computer program contains a program code for executing the method shown in the flow diagram. In such an embodiment, the computer program may be downloaded and installed from the network by the communication apparatus 609, or installed from the storage apparatus 608, or installed from ROM 602. When the computer program is executed by the processing apparatus 601, the above functions defined in the method of the embodiments of the present disclosure are executed.

The electronic device provided in this embodiment of the present disclosure and the method provided in the foregoing embodiments belong to the same inventive concept. For technical details not described in detail in this embodiment, a reference may be made to the foregoing embodiments, and this embodiment and the foregoing embodiments have the same beneficial effects.

An embodiment of the present disclosure provides a computer storage medium, storing a computer program which, when executed by a processor, causes the method provided by the above embodiments to be implemented.

It should be noted that the above computer-readable medium in the present disclosure may be a computer-readable signal medium, a computer-readable storage medium, or any combinations of the two. The computer-readable storage medium may be, for example, but not limited to, a system, an apparatus or a device of electricity, magnetism, light, electromagnetism, infrared, or semiconductor, or any combinations of the above. More specific examples of the computer-readable storage medium may include but not be limited to: an electric connector with one or more wires, a portable computer magnetic disk, a hard disk drive, a random access memory (RAM), a read-only memory (ROM), an erasable programmable read-only memory (EPROM or flash memory), an optical fiber, a portable compact disk read-only memory (CD-ROM), an optical storage device, a magnetic storage device or any suitable combinations of the above. In the present disclosure, the computer-readable storage medium may be any visible medium that contains or stores a program, and the program may be used by an instruction executive system, apparatus or device or used in combination with it. In the present disclosure, the computer-readable signal medium may include a data signal propagated in a baseband or as a part of a carrier wave, it carries the computer-readable program code. The data signal propagated in this way may adopt various forms, including but not limited to an electromagnetic signal, an optical signal, or any suitable combinations of the above. The computer-readable signal medium may also be any computer-readable medium other than the computer-readable storage medium, and the computer-readable signal medium may send, propagate, or transmit the program used by the instruction executive system, apparatus or device or in combination with it. The program code contained on the computer-readable medium may be transmitted by using any suitable medium, including but not limited to: a wire, an optical cable, a radio frequency (RF) or the like, or any suitable combinations of the above.

In some implementation modes, a client and a server may be communicated by using any currently known or future-developed network protocols such as a HyperText Transfer Protocol (HTTP), and may interconnect with any form or medium of digital data communication (such as a communication network). Examples of the communication network include a local area network ("LAN"), a wide area network ("WAN"), an internet work (such as the Internet), and an end-to-end network (such as an ad hoc end-to-end network), as well as any currently known or future-developed networks.

The above-mentioned computer-readable medium may be included in the above-mentioned electronic device, or may also exist alone without being assembled into the electronic device.

The above-mentioned computer-readable medium carries one or more programs which, when executed by the electronic device, cause the electronic device to perform the method described above.

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the module or unit does not constitute a limitation of the unit itself under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

It should be noted that, the embodiments are described herein in a progressive manner. Each embodiment focuses on the difference from another embodiment, and the same and similar parts between the embodiments may refer to each other. Since the system or apparatus disclosed in an embodiment corresponds to the method disclosed in another embodiment, the description is relatively simple, and a reference can be made to the method description.

It should be understood that in the present disclosure, the phrase "at least one" refers to one or more, and the phrase "a plurality of' refers to two or more. The term "and/or" is used for describing an association relationship of associated objects, and represents that three relationships may exist. For example, A and/or B may represent that: A exists alone, B exists alone, and A and B exist at the same time, where A and B may be singular or plural. The character "/" usually represents an "or" relationship between associated objects. The phrase "at least one of the following items" or a similar expression thereof refers to any combination of these items, including a single item or any combination of plural items. For example, "at least one of a, b, or c" may represent: a, b, c, "a and b", "a and c", "b and c", or "a and b and c", where a, b, and c may each be a single or plural item.

It also needs to be noted that as used herein, relational terms such as first and second are merely used to distinguish one entity or operation from another entity or operation without necessarily requiring or implying any actual such relationship or order between such entities or operations. In addition, terms "include", "comprise", or any other variations thereof are intended to cover a non-exclusive inclusion, so that a process, a method, an article, or a device including a series of elements not only includes those elements, but also includes other elements that are not explicitly listed, or also includes inherent elements of the process, the method, the article, or the device. Without more restrictions, the elements defined by the sentence "including a ..." do not exclude the existence of other identical elements in the process, method, article, or device including the elements.

The steps of the method or algorithm described in combination with the embodiments disclosed herein may be directly implemented by hardware, software modules executed by a processor, or a combination of both. The software modules may be placed in a random access memory (RAM), a memory, a read-only memory (ROM), an electrically programmable ROM, an electrically erasable programmable ROM, a register, a hard disk, a removable disk, a compact disc read-only memory (CD-ROM), or a storage medium in any other form well known in the art

The above descriptions of the disclosed embodiments can enable a person skilled in the art to implement or practice the present disclosure. Various modifications to the embodiments are readily apparent to a person skilled in the art, and the generic principles defined herein may be practiced in other embodiments without departing from the spirit or scope of the present disclosure. Thus, the present disclosure is not limited to the embodiments shown herein but falls within the widest scope consistent with the principles and novel features disclosed herein.

## Claims

1. A method for displaying information, comprising:
receiving comment information to be posted input on a live-stream room interface; and
displaying at least one function label on the live-stream room interface based on the comment information to be posted, wherein the function label is used for providing an entry to a function page corresponding to the function label.

2. The method according to claim 1, wherein the receiving comment information to be posted input on a live-stream room interface, comprises: receiving the comment information to be posted input by a user in an input box of the live-stream room interface; and
the function label is used for providing the user with the entry to the function page corresponding to the function label.

3. The method according to claim 2, wherein the displaying at least one function label on the live-stream room interface based on the comment information to be posted, comprises:
determining a target demand corresponding to the user based on the comment information to be posted; and
obtaining at least one function label matching the target demand, and displaying the at least one function label on the live-stream room interface.

4. The method according to claim 3, wherein the determining a target demand corresponding to the user based on the comment information to be posted, comprises:
performing matching between words in the comment information and a preset keyword to obtain a target keyword; and
determining a user demand corresponding to the target keyword as the target demand of the user.

5. The method according to claim 3, wherein the determining a target demand corresponding to the user based on the comment information to be posted, comprises:
inputting the comment information to be posted to a demand prediction model to obtain the target demand corresponding to the user.

6. The method according to claim 1, wherein the displaying at least one function label on the live-stream room interface based on the comment information to be posted, comprises:
when the comment information to be posted comprises a text corresponding to a preset keyword, displaying at least one function label corresponding to the preset keyword on the live-stream room interface according to the preset keyword.

7. The method according to claim 2, wherein the displaying at least one function label on the live-stream room interface based on the comment information to be posted, comprises:
when the comment information to be posted comprises a sentence corresponding to a preset resource type keyword or the comment information to be posted indicates that a user demand is resource type information, displaying at least one resource type function label on the live-stream room interface.

8. The method according to claim 7, wherein the resource type keyword is a keyword related to a customer servicer corresponding to a resource, the resource type information is information related to the customer servicer corresponding to the resource, and the resource type function label is a function label related to the customer servicer corresponding to the resource; and
the method further comprises:
displaying a session interface in response to a triggering operation of the user on the function label related to the customer servicer; and
sending an inquiry message to the customer servicer in response to a triggering operation of the user on the session interface.

9. The method according to claim 7, wherein the resource type keyword is a resource transfer type keyword, the resource type information is resource transfer type information, and the resource type function label comprises a resource transfer type label.

10. The method according to claim 9, wherein the resource transfer type keyword is a keyword related to a resource delivery prompt, the resource transfer type information is resource delivery prompt information, and the resource transfer type label comprises a resource delivery prompt label; and
the method further comprises:
displaying a resource delivery prompt page in response to a triggering operation of the user on the resource delivery prompt label; and
sending alerting reminder message to a resource delivery terminal in response to a triggering operation of the user on the resource delivery prompt page.

11. The method according to claim 9, wherein the resource transfer type keyword is a keyword related to logistics corresponding to a resource, the resource transfer type information is logistics information corresponding to the resource, and the resource transfer type label comprises a logistics label corresponding to the resource; and
the method further comprises:
displaying a logistics page in response to a triggering operation of the user on the logistics label, wherein the logistics page displays the logistics information corresponding to the resource.

12. The method according to claim 2, wherein the displaying at least one function label on the live-stream room interface based on the comment information to be posted, comprises:
displaying at least one directed object function label on the live-stream room interface when the comment information to be posted comprises a directed character type text.

13. The method according to claim 12, wherein the displaying at least one directed object function label on the live-stream room interface when the comment information to be posted comprises a directed character type text, comprises:
when the comment information to be posted comprises the directed character type text, displaying a first directed object function label on the live-stream room interface; and
the method further comprises:
displaying a first selection page in response to a triggering operation of the user on the first directed object label, wherein the first selection page displays a plurality of first candidate objects, and the first candidate objects are objects in a same live-stream room as the user.

14. The method according to claim 12, wherein the displaying at least one directed object function label on the live-stream room interface when the comment information to be posted comprises a directed character type text, comprises:
when the comment information to be posted comprises the directed character type text, displaying a second directed object function label on the live-stream room interface; and
displaying a second selection page in response to a triggering operation of the user on the second directed object label, wherein the second selection page displays a plurality of second candidate objects, and the second candidate objects are objects having a preset association relationship with the user.

15. The method according to claim 13 or 14, wherein the first selection page further displays a first directed control, and/or the second selection page further displays a second directed control; and the method further comprises:
displaying an identifier of a candidate object selected by the user in the input box in response to a triggering operation of the user on the first directed control and/or the second directed control.

16. The method according to claim 15, further comprising:
displaying comment information in the input box in a comment display area of the live-stream room interface in response to a sending operation triggered by the user for the input box, wherein the comment information comprises the identifier of the candidate object selected by the user to prompt the candidate object corresponding to the identifier to view the comment information.

17. The method according to claim 2, further comprising:
displaying the function page corresponding to the function label in response to a triggering operation of the user on the function label.

18. The method according to claim 2, further comprising:
canceling displaying the function label on the live-stream room interface in response to a closing operation triggered by the user for the input box.

19. An apparatus for displaying information, comprising:
a receiving unit, configured to receive comment information to be posted input on a live-stream room interface; and
a display unit, configured to display at least one function label on the live-stream room interface based on the comment information to be posted, wherein the function label is used for providing an entry to a function page corresponding to the function label.

20. An electronic device, comprising a processor and a memory,
wherein the memory is configured to store instructions or a computer program; and
the processor is configured to execute the instructions or the computer program in the memory to cause the electronic device to perform the method according to any one of claims 1 to 18.

21. A computer-readable storage medium, the computer-readable storage medium storing instructions, wherein when the instructions are run on a device, the device is caused to perform the method according to any one of claims 1 to 18.

22. A computer program product, comprising computer program instructions, wherein when the computer program instructions are run on a computer, the computer is caused to perform the method according to any one of claims 1 to 18.
